# EUROPÄISCHE PATENTSCHRIFT

(11) **EP 2 433 750 B1**
(45) Veröffentlichungstag und Bekanntmachung des Hinweises auf die Patenterteilung: **10.04.2013**
(21) Anmeldenummer: 11182254.0
(22) Anmeldetag: 21.09.2011
(51) Int. Cl.: B25B 5/06, B25B 5/08

(54) **Betätigungsvorrichtung**
Actuation device
Dispositif d'actionnement

(30) Priorität: 23.09.2010 DE 102010046188; 20.09.2011 US 201113236776
(43) Veröffentlichungstag der Anmeldung: 28.03.2012
(73) Patentinhaber: DE-STA-CO Europe GmbH, 61440 Oberursel (DE)
(72) Erfinder: Leordean, Vasile Danut, 400171 Cluj-Napoca (RO); Balc, Nicolae, 400171 Cluj-Napoca (RO); Schuh, Bernhard, 90431 Nürnberg (DE); Ulle, Detlev, 97645 Ostheim (DE); Walther, Peter, 61350 Bad Homburg (DE)
(74) Vertreter: Wolf, Michael

(56) Entgegenhaltungen:
- WO-A1-2007/042518
- DE-B- 1 183 204
- DE-B3- 10 256 385
- DE-U1- 20 206 951
- US-A- 4 872 360

## Beschreibung

Die Erfindung betrifft eine Betätigungsvorrichtung gemäß dem Oberbegriff des Patentanspruchs 1.

Eine Betätigungsvorrichtung der eingangs genannten Art ist nach der DE 1 183 204 A bekannt. Diese umfasst ein aus einem Zylinder und einem Kolben mit einer Kolbenstange bestehendes Antriebsglied, wobei außerhalb des Zylinders an der Kolbenstange eine Zahnstange vorgesehen ist, die mit einem Zahnradelement zusammenwirkend ausgebildet ist, an dem verdrehfest ein in Bezug auf das Antriebsglied schwenkbares Betätigungsglied angeordnet ist. Bei dieser Lösung ist unter "zusammenwirkend" zu verstehen, dass das Zahnradelement und die Zahnstange unmittelbar formschlüssig miteinander in Verbindung stehen, d. h. das Zahnradelement und die Zahnstange kämmen bei einer Bewegung des Kolbens bzw. der Kolbenstange mit- bzw. ineinander. Das Betätigungsglied ist bei dieser Lösung als Schwenkhebel einer Gießereiformmaschine ausgebildet.

Der Erfindung liegt die Aufgabe zugrunde, eine Betätigungsvorrichtung der eingangs genannten Art zu verbessern. Insbesondere soll eine Betätigungsvorrichtung der eingangs genannten Art in der Weise verbessert werden, dass bei Verwendung einer Zahnrad-Zahnstangen-Kombination eine bei Schwenkeinheiten bzw. Spannvorrichtungen übliche, zum Beispiel aus der DE 102 56 385 B3 bekannte Gehäuseform verwendbar ist.

Diese Aufgabe ist mit einer Betätigungsvorrichtung der eingangs genannten Art durch die im Kennzeichen des Patentanspruchs 1 aufgeführten Merkmale gelöst.

Nach der Erfindung ist also vorgesehen, dass zwischen dem Zylinder und dem Zahnradelement ein einerseits mit der Zahnstange und ein andererseits mit dem Zahnradelement zusammenwirkendes Zwischenzahnradelement angeordnet ist.

Mit anderen Worten ist erfindungsgemäß ein zunächst unnötig bzw. überflüssig erscheinendes Zusatzzahnrad (Zwischenzahnradelement) vorgesehen. Dank dieses Zahnrades ist es aber möglich, die aus der DE 1 183 204 A bekannte Zahnrad-Zahnstangen-Kombination in einem für Spannvorrichtungen bzw. Schwenkeinheiten üblichen Gehäuse unterzubringen, und zwar insbesondere deshalb, weil die Anordnung des Zusatzzahnrades zwischen dem Zylinder und dem Zahnradelement zur Folge hat, dass der Ausfahrweg der Zahnstange im Kopfbereich der Spannvorrichtungen bzw. der Schwenkeinheiten (also an dem dem Zylinder gegenüberliegenden Ende der Betätigungsvorrichtung) klein gehalten werden kann. Würde man (wie beim vorbekannten Stand der Technik) auf das Zusatzzahnrad verzichten, wäre es nicht zu vermeiden, dass die Zahnstange bei entsprechender Kolbenstellung weit über das mit dem Betätigungsglied versehene Zahnradelement hinausragen würde. Durch den Mehraufwand des Zwischenzahnradelements gewinnt man somit auf überraschende Weise für den Verfahrweg der Zahnstange günstig nutzbaren Raum im Kopf der Betätigungsvorrichtung.

Bezüglich der Maßgabe, dass das Zwischenzahnradelement "zwischen" dem Zylinder und dem Zahnradelement angeordnet sein soll, ist anzumerken, dass damit jede Anordnung gemeint ist, bei der sich der oben beschriebene Raumvorteil ergibt. Insbesondere nicht gemeint ist dementsprechend eine Anordnung, bei der die Achsen des Zahnradelements und des Zwischenzahnradelements den gleichen Abstand zum Zylinder haben, sprich das Zahnradelement nicht "oberhalb" des mit der Zahnstange zusammenwirkenden Zwischenzahnradelement angeordnet ist.

Weiterhin kann nach der Erfindung auch mehr als "ein" Zwischenzahnradelement zwischen der Zahnstange und dem Zahnradelement mit dem Betätigungsglied vorgesehen sein, um den erfindungsgemäßen Effekt zu erreichen.

Ist tatsächlich nur "ein" Zwischenzahnradelement vorgesehen, so ist unter der Maßgabe (siehe das Kennzeichen des Patentanspruchs 1), dass dieses einerseits mit der Zahnstange und andererseits mit dem Zahnradelement "zusammenwirkend" ausgebildet ist, zu verstehen, dass dieses jeweils unmittelbar formschlüssig sowohl mit der Zahnstange als auch mit dem Zahnradelement zusammenarbeitet bzw. kämmt.

Sind dagegen zum Beispiel zwei Zwischenzahnradelemente vorgesehen, so bedeutet "zusammenwirkend", dass das eine Zwischenzahnradelement einerseits mit der Zahnstange und andererseits mit dem anderen Zwischenzahnradelement formschlüssig zusammenarbeitet und dementsprechend das andere Zwischenzahnradelement darüber hinaus mit dem mit dem Betätigungsglied versehenen Zahnradelement formschlüssig kämmt.

Andere vorteilhafte Weiterbildungen der erfindungsgemäßen Betätigungsvorrichtung ergeben sich aus den abhängigen Patentansprüchen.

Die erfindungsgemäße Betätigungsvorrichtung einschließlich ihrer vorteilhaften Weiterbildungen gemäß der abhängigen Patentansprüche wird nachfolgend anhand der zeichnerischen Darstellung verschiedener Ausführungsbeispiele genauer beschrieben.

Es zeigt (teilweise leicht schematisiert)
- Figur 1: im Schnitt eine Ausführungsform der erfindungsgemäßen Betätigungsvorrichtung in Arbeitsstellung;
- Figur 2: die Ausführungsform gemäß Figur 1 in Öffnungsstellung;
- Figur 3: perspektivisch und geschnitten die Betätigungsvorrichtung gemäß Figur 1 in Arbeitsstellung;
- Figur 4: perspektivisch und bei geöffnetem Gehäuse einen Teil einer anderen Ausführungsform der erfindungsgemäßen Betätigungsvorrichtung in einer ersten Öffnungswinkeleinstellung bei montierter Verdrehsicherung;
- Figur 5: im Schnitt einen Teil der Ausführungsform gemäß Figur 4 in einer anderen Öffnungswinkeleinstellung;
- Figur 6: im Schnitt einen Teil der Ausführungsform gemäß Figur 4 in Arbeitsstellung; und
- Figur 7: im Schnitt einen Teil der Ausführungsform gemäß Figur 4 in einer weiteren Öffnungswinkeleinstellung bei demontierter Verdrehsicherung.

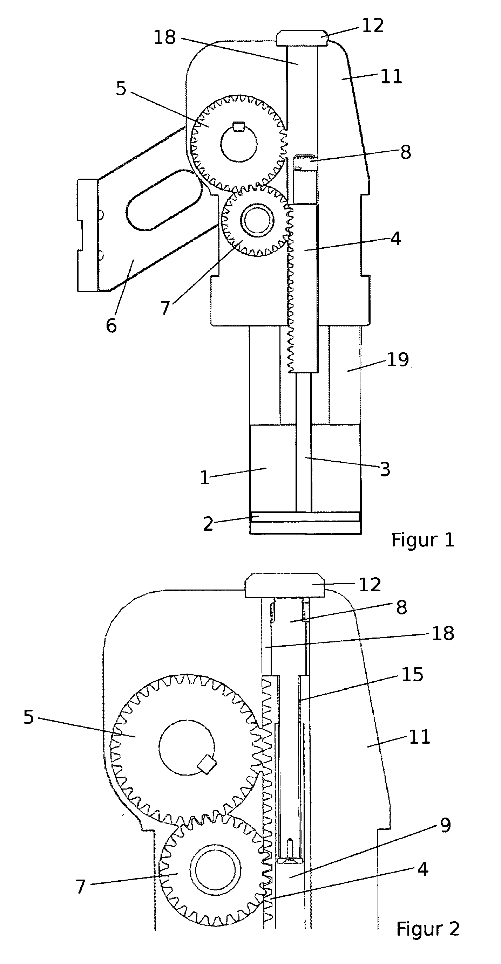

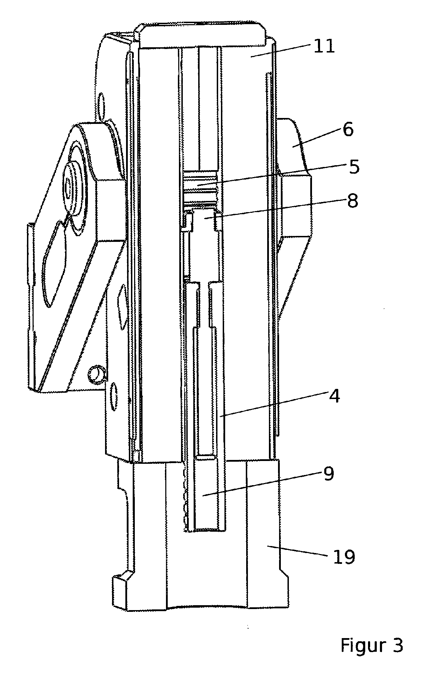

Die in den Figuren 1 bis 7 dargestellte Betätigungsvorrichtung ist in bekannter Weise aus einem aus einem Zylinder 1 und einem Kolben 2 mit einer Kolbenstange 3 bestehenden Antriebsglied gebildet. Dieses Antriebsglied ist wahlweise hydraulisch oder pneumatisch betätigbar ausgebildet. Außerhalb des Zylinders 1 ist an der Kolbenstange 3 eine Zahnstange 4 vorgesehen, die mit einem Zahnradelement 5 zusammenwirkend ausgebildet ist, an dem verdrehfest ein in Bezug auf das Antriebsglied schwenkbares Betätigungsglied 6 angeordnet ist. Die Zahnstange 4 und das Zahnradelement 5 sind in einem sich unter Zwischenschaltung eines Distanzelements 19 an das Antriebsglied anschließenden Gehäuse 11 angeordnet, das in bekannter Weise aus zwei Gehäusehalbschalen gebildet ist. Dabei weist das Gehäuse 11 bewusst eine etwa quaderförmige (schmal, längliche) Außenform mit abgerundeten Kanten auf, wie sie auch von Kniehebelspannvorrichtungen oder auch Schwenkvorrichtungen bekannt ist, um eine leichte Austauschbarkeit in Bezug auf diese herkömmlichen Vorrichtungen zu ermöglichen. Außerdem sind am Gehäuse an mehreren Seiten Anschlussbereiche zur Befestigung der Betätigungsvorrichtung an einer automatischen Produktionsanlage oder dergleichen vorgesehen.

Wesentlich für die erfindungsgemäße Betätigungsvorrichtung ist nun, dass zwischen dem Zylinder 1 und dem Zahnradelement 5 ein einerseits mit der Zahnstange 4 und ein andererseits mit dem Zahnradelement 5 zusammenwirkendes Zwischenzahnradelement 7 angeordnet ist.

Wie eingangs erläutert, hat diese Maßgabe den Vorteil, dass die Zahnstange 4 trotz eines langen Verstellwegs, der für einen entsprechenden Schwenkbereich des Betätigungsgliedes 6 erforderlich ist, innerhalb des Gehäuses 11 geführt sein kann.

Beim Ausführungsbeispiel gemäß den Figuren 1 bis 3 ist die erfindungsgemäße Betätigungsvorrichtung als sogenannte Schwenkvorrichtung ausgebildet. Am Betätigungsglied 6 (Schwenkhebel) einer solchen Schwenkvorrichtung ist zum Beispiel ein schweres Bauteil, ein Bearbeitungsgerät oder dergleichen befestigt.

Bei diesem Ausführungsbeispiel sind sowohl das Zahnradelement 5 als auch das Zwischenzahnradelement 7 auf einer Seite der Zahnstange 4 angeordnet, und zwar das Zahnradelement 5 soweit wie möglich oberhalb des Zwischenzahnradelements 7. Wie aus den Figuren 1 und 2 ersichtlich, ist hierzu eine Anordnung bevorzugt, bei der das Zahnradelement 5 gerade mit einem solchen Abstand zur Zahnstange 4 positioniert ist, das sich die jeweiligen Zähne nicht berühren. Hinsichtlich eines günstigen Drehmoments ist weiterhin vorgesehen, dass das Zahnradelement 5 einen größeren Durchmesser als das Zwischenzahnradelement 7 aufweist.

Eine wichtige Eigenschaft solcher Schwenkvorrichtungen besteht darin, dass man den Öffnungswinkel des Betätigungsgliedes 6 (mithin die in Figur 2 dargestellte, obere Endlage der Zahnstange 4) genau einstellen kann, da dieser orientiert am Anwendungsfall stets so klein wie möglich, aber so groß wie nötig gewählt wird.

Zu diesem Zweck ist der Zahnstange 4 an ihrem freien, dem Kolben 2 abgewandten Ende ein Öffnungswinkelbegrenzungselement 8 zugeordnet. Dieses ist besonders bevorzugt längsverstellbar an der Zahnstange 4 angeordnet, wobei hierzu zwischen dem Öffnungswinkelbegrenzungselement 8 und der Zahnstange 4 eine Gewindeverbindung 15 vorgesehen ist. Außerdem weist die Zahnstange 4 einen Hohlraum 9 zur mindestens teilweisen Aufnahme des Öffnungswinkelbegrenzungselements 8 auf. Die Gewindeverbindung 15 ist in bzw. an diesem Hohlraum 9 angeordnet, wobei die Zahnstange 4 mit einem Innengewinde und das Öffnungswinkelbegrenzungselement 8 mit einem dazu passenden Außengewinde versehen ist.

Als Gegenpart zum Öffnungswinkelbegrenzungselement 8 ist am Gehäuse 11 fest, aber lösbar ein Widerlager 12 für dieses angeordnet. Ferner weist das Gehäuse 11 in Verlängerung der Zahnstange 4 zur Aufnahme des Öffnungswinkelbegrenzungselements 8 einen Hohlraum 18 auf, der mit dem Widerlager 12 versehbar bzw. abschließbar ausgebildet ist. Darüber hinaus ist das Widerlager 12 als von außerhalb des Gehäuses 11 zugängliches Anschlagelement, insbesondere Anschlagplatte, ausgebildet.

Aus der Gesamtschau der Figuren 1 bis 3 ist ersichtlich, wie das besagte Öffnungswinkelbegrenzungselement 8 funktioniert: Dargestellt ist eine Einstellung, die einen maximalen Öffnungswinkel ermöglicht. Dreht man das Öffnungswinkelbegrenzungselement 8 (nach Demontage des Widerlagers 12 vom Gehäuse 11) über die Gewindeverbindung 15 aus dem Hohlraum 9 heraus, so nimmt der Abstand von dessen freien Ende zur Zahnstange 4 zu, wodurch gleichzeitig der Verstellweg der Zahnstange 4 und damit der Öffnungswinkel eingeschränkt wird.

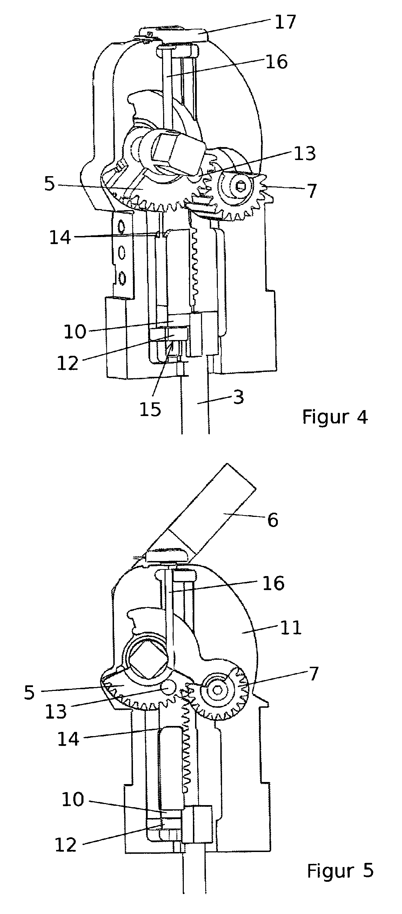

Beim Ausführungsbeispiel gemäß den Figuren 4 bis 7 ist die erfindungsgemäße Betätigungsvorrichtung als Spannvorrichtung ausgebildet. Das Betätigungsglied 6 einer solchen Spannvorrichtung ist ein Spannarm, der sowohl auf einer, aber auch auf beiden Seiten der Vorrichtung mit der Drehachse (hier ein Vierkantwelle) des Zahnradelements 5 verbunden sein kann.

Eine wesentliche Besonderheit dieser Ausführungsform besteht darin, dass das Zwischenzahnradelement 7 als auf einer Seite der Zahnstange 4 angeordnete Zahnradwalz ausgebildet und das Zahnradelement 5 die Zahnstange 4 umgreifend bzw. übergreifend auf deren anderen Seite angeordnet ist. Wie insbesondere aus Figur 4 ersichtlich, ist dabei besonders bevorzugt vorgesehen, dass das Zahnradelement 5 als die Zahnstange 4 beidseitig umgreifendes Doppelzahnrad ausgebildet ist, d. h. die Zahnstange 4 kann sich zwischen den Zahnrädern des Doppelzahnrads (Zahnradelement 5) auf- und abbewegen. Das Zwischenzahnradelement 7 weist eine Breite auf, die mindestens dem Abstand der Zahnräder des Doppelzahnrads entspricht, so dass Zwischenzahnradelement 7 mittig mit der Zahnstange 4 und mit seinen Rändern mit den Zahnrädern des Doppelzahnrads in kämmender Verbindung steht.

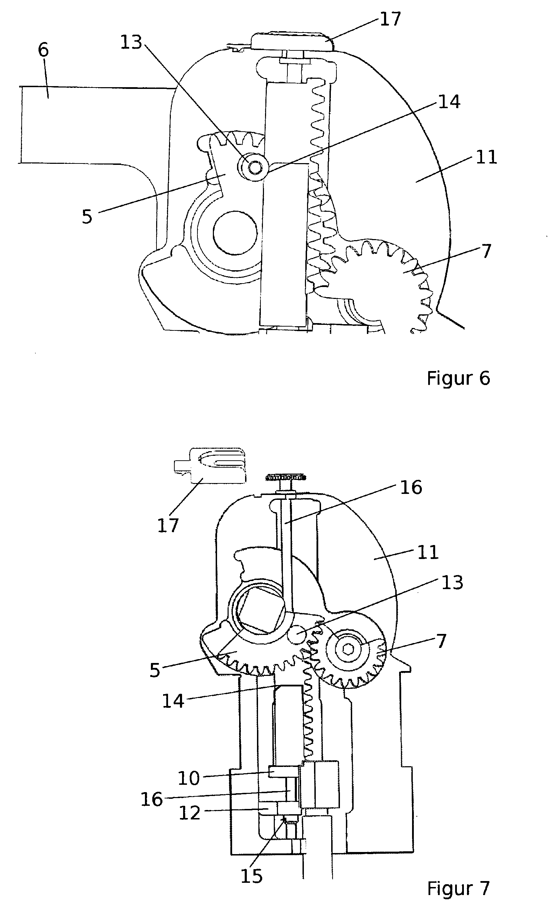

Um die Betätigungsvorrichtung möglichst kompakt gestalten zu können, aber auch weil der Öffnungswinkel des Spannarms typischer Weise deutlich weniger als 180° beträgt, sind bei der dargestellten Ausführungsform sowohl das Zahnradelement 5 als auch das Zwischenzahnradelement 7 kreissektorförmig ausgebildet. Je nach Gehäuseform ist es aber auch möglich, dass wahlweise das Zahnradelement 5 oder das Zwischenzahnradelement 7 kreissektorförmig ausgebildet sind. Der Vergleich der Figuren 5 und 6 zeigt besonders deutlich, dass kreissektorförmige Zahnräder ausreichend sind, um sowohl die Öffnungsstellung (siehe Figur 5) als auch die Arbeitsstellung (siehe Figur 6) einstellen zu können.

Auch bei dieser Ausführungsform ist zur Öffnungswinkelbegrenzung ein entsprechendes Element vorgesehen, nämlich das Anschlagelement 10, das wahlweise an der Kolbenstange 3 bzw. der Zahnstange 4 angeordnet ist.

Da sich durch die Anordnung der Zahnräder auf beiden Seiten der Zahnstange 4 im Vergleich zum ersten Ausführungsbeispiel eine invertierte Drehbewegung ergibt, ist das Anschlagelement 10 beim Ausführungsbeispiel gemäß den Figuren 4 bis 7 zwischen dem Zwischenzahnradelement 7 und dem Zylinder 1 angeordnet, wobei dem Anschlagelement 10 außerdem im Gehäuse 11 (antriebsgliedseitig) ein verstellbar ausgebildetes Widerlager 12 zugeordnet ist, das seinerseits mit einem von außen betätigbaren Stellglied 16 verbunden ist. Dieses Stellglied 16 ist als Stange mit Gewinde und durch einen Hohlraum 9 in der Zahnstange 4 verlaufend ausgebildet. Der von außerhalb des Gehäuses 11 zugängliche Teil des Stellglieds 16 ist am zylinderabgewandten Ende des Gehäuses 11 angeordnet. Das Stellglied 16 ist außerdem außerhalb des Gehäuses 11 mit einer Verdrehsicherung 17 versehen ist: Die Figuren 4 bis 6 zeigen die Betätigungsvorrichtung mit montierter Verdrehsicherung 17, Figur 7 offenbart in teilperspektivischer Ansicht die etwa hufeisenförmige Form der Verdrehsicherung 17, wobei eine Verzahnung an einem Drehknopf des Stellglied 16 mit einer entsprechenden Verzahnung an der Verdrehsicherung 17 zusammenwirkend ausgebildet ist und die gewünschte Arretierung bewirkt.

Will man also den Öffnungswinkel der Betätigungsvorrichtung beeinflussen, löst man zunächst die Verdrehsicherung 17, dreht am Stellglied 16, so dass sich das Widerlager 12 für das an der Zahnstange 4 bzw. an der Kolbenstange 3 befestigte Anschlagelement 10 über die Gewindeverbindung (nur angedeutet dargestellt) in Richtung der Hauptachse der Zahnstange 4 wahlweise nach oben oder unten verschiebt.

Eine weitere Besonderheit der Ausführungsform gemäß den Figuren 4 bis 7 besteht darin, dass eine über das Zwischenzahnradelement 7 bestehende Wirkverbindung zwischen der Zahnstange 4 und dem Zahnradelement 5 auskoppelbar ausgebildet ist. Dies ist am besten in Figur 6 zu erkennen, aus der sich ergibt, dass die Zahnstange 4 kolbenstangenseitig einen "zahnfreien" Bereich aufweist, d. h. mindestens der kolbenstangennächste Zahn der Zahnstange 4 ist mindestens verkürzt ausgebildet (oder sogar ganz weggelassen), so dass die Wirkverbindung zwischen Zahnstange 4 und dem Zwischenzahnradelement 7 aufgehoben ist. Stattdessen ist für diese besondere Stellposition, um dennoch einen Kraftschluss zwischen der Zahnstange 4 und dem Zahnradelement 5 zu gewährleisten, am Zahnradelement 5 drehachsendistanziert ein Stellelement 13 und an der Zahnstange 4 ein mit dem Stellelement 13 (in ausgekoppelter Position) zusammenwirkendes Führungselement 14 vorgesehen ist. Dieses Führungselement 14 ist als Steuerkurve zur Festlegung des Betätigungsgliedes 6 in Spannstellung (Arbeitsstellung) ausgebildet, wobei das Stellelement 13, wie dargestellt, bevorzugt als zylinderförmiger, vorzugsweise drehbar am Zahnradelement 5 gelagerter Zapfen ausgebildet ist. Bei Ausbildung eines Doppelzahnrades, wie oben erläutert, können auch entsprechend zwei Stell- 13 und zwei Führungselemente 14 vorgesehen sein.

Fährt also die Zahnstange 4 in eine obere Position, bei der der Eingriff zwischen Zahnstange 4 und Zwischenzahnradelement 7 aufgrund der fehlenden Verzahnung an dieser Stelle fehlt, kommt es zur Kontaktaufnahme zwischen dem an der Zahnstange 4 vorgesehenen Führungselement 14 und dem am Zahnradelement 5 angeordneten Stellelement 13, und zwar in der Weise, dass das Führungselement 14 eine Drehbewegung in Richtung Öffnungsstellung ausschließt (siehe Figur 6). Da dabei das Führungselement 14, wie oben erwähnt, als Steuerkurve (schiefe Ebene) ausgebildet ist, ergibt sich in vorteilhafter Weise eine selbsthemmende Wirkverbindung, die einen wesentlich größeren Öffnungswiderstand leistet als die insoweit leicht drehende Verbindung über die Zahnverbindung (Zahnstange 4, Zahnradelement 5, Zwischenzahnradelement 7). Mit anderen Worten ausgedrückt, zeichnet sich die erfindungsgemäße Lösung dadurch aus, dass trotz Verwendung einer Zahnradverbindung in Arbeitsposition eine echte Verriegelungsposition erreichbar ist.

### Bezugszeichenliste

- 1: Zylinder
- 2: Kolben
- 3: Kolbenstange
- 4: Zahnstange
- 5: Zahnradelement
- 6: Betätigungsglied
- 7: Zwischenzahnradelement
- 8: Öffnungswinkelbegrenzungselement
- 9: Hohlraum
- 10: Anschlagelement
- 11: Gehäuse
- 12: Widerlager
- 13: Stellelement
- 14: Führungselement
- 15: Gewindeverbindung
- 16: Stellglied
- 17: Verdrehsicherung
- 18: Hohlraum
- 19: Distanzelement

## Patentansprüche

1. Betätigungsvorrichtung, umfassend ein aus einem Zylinder (1) und einem Kolben (2) mit einer Kolbenstange (3) bestehendes Antriebsglied, wobei außerhalb des Zylinders (1) an der Kolbenstange (3) eine Zahnstange (4) vorgesehen ist, die mit einem Zahnradelement (5) zusammenwirkend ausgebildet ist, an dem verdrehfest ein in Bezug auf das Antriebsglied schwenkbares Betätigungsglied (6) angeordnet ist,
**dadurch gekennzeichnet,**
**dass** zwischen dem Zylinder (1) und dem Zahnradelement (5) ein einerseits mit der Zahnstange (4) und ein andererseits mit dem Zahnradelement (5) zusammenwirkendes Zwischenzahnradelement (7) angeordnet ist.

2. Betätigungsvorrichtung nach Anspruch 1,
**dadurch gekennzeichnet,**
**dass** sowohl das Zahnradelement (5) als auch das Zwischenzahnradelement (7) auf einer Seite der Zahnstange (4) angeordnet sind.

3. Betätigungsvorrichtung nach Anspruch 1 oder 2,
**dadurch gekennzeichnet,**
**dass** der Zahnstange (4) an ihrem freien, dem Kolben (2) abgewandten Ende ein Öffnungswinkelbegrenzungselement (8) zugeordnet ist.

4. Betätigungsvorrichtung nach Anspruch 3,
**dadurch gekennzeichnet,**
**dass** die Zahnstange (4) einen Hohlraum (9) zur Aufnahme des Öffnungswinkelbegrenzungselements (8) aufweist.

5. Betätigungsvorrichtung nach einem der Ansprüche 1 bis 4,
**dadurch gekennzeichnet,**
**dass** das Zwischenzahnradelement (7) als auf einer Seite der Zahnstange (4) angeordnete Zahnradwalz ausgebildet und das Zahnradelement (5) die Zahnstange (4) umgreifend auf deren anderen Seite angeordnet ist.

6. Betätigungsvorrichtung nach Anspruch 5,
**dadurch gekennzeichnet,**
**dass** das Zahnradelement (5) als die Zahnstange (4) beidseitig umgreifendes Doppelzahnrad ausgebildet ist.

7. Betätigungsvorrichtung nach Anspruch 5 oder 6,
**dadurch gekennzeichnet,**
**dass** wahlweise an der Kolbenstange (3) oder der Zahnstange (4) ein Anschlagelement (10) angeordnet ist.

8. Betätigungsvorrichtung nach Anspruch 7, wobei die Zahnstange (4) in einem Gehäuse (11) angeordnet ist,
**dadurch gekennzeichnet,**
**dass** dem Anschlagelement (10) im Gehäuse (11) ein verstellbar ausgebildetes Widerlager (12) zugeordnet ist.

9. Betätigungsvorrichtung nach einem der Ansprüche 1 bis 8,
**dadurch gekennzeichnet,**
**dass** eine über das Zwischenzahnradelement (7) bestehende Wirkverbindung zwischen der Zahnstange (4) und dem Zahnradelement (5) auskoppelbar ausgebildet ist.

10. Betätigungsvorrichtung nach Anspruch 9,
**dadurch gekennzeichnet,**
**dass** am Zahnradelement (5) drehachsendistanziert ein Stellelement (13) und an der Zahnstange (4) ein mit dem Stellelement (13) in ausgekoppelter Position zusammenwirkendes Führungselement (14) vorgesehen ist.

## Claims

1. An actuation device, comprising a drive member which consists of a cylinder (1) and a piston (2) having a piston rod (3), wherein a toothed rack (4) is provided on the piston rod (3) outside the cylinder (1), which toothed rack is formed so as to interact with a gearwheel element (5) on which an actuation member (6) is arranged in a rotationally fixed manner, which can be pivoted in relation to the drive member,
**characterised in that**
an intermediate gearwheel element (7), which interacts with the toothed rack (4) on one side and with the gearwheel element (5) on the other side is arranged between the cylinder (1) and the gearwheel element (5).

2. The actuation device according to Claim 1,
**characterised in that**
both the gearwheel element (5) and the intermediate gearwheel element (7) are arranged on one side of the toothed rack (4).

3. The actuation device according to Claim 1 or 2,
**characterised in that**
the toothed rack (4) is assigned an opening angle limitation element (8) on its free end facing away from the piston (2).

4. The actuation device according to Claim 3,
**characterised in that**
the toothed rack (4) has a cavity (9) for receiving the opening angle limitation element (8).

5. The actuation device according to one of Claims 1 to 4,
**characterised in that**
the intermediate gearwheel element (7) is formed as a gearwheel roller which is arranged on one side of the toothed rack (4), and the gearwheel element (5) is arranged on the other side of the toothed rack (4), enclosing the latter.

6. The actuation device according to Claim 5,
**characterised in that**
the gearwheel element (5) is formed as a double gearwheel which encloses the toothed rack (4) on both sides.

7. The actuation device according to Claim 5 or 6,
**characterised in that**
a stop element (10) is arranged either on the piston rod (3) or toothed rack (4).

8. The actuation device according to Claim 7, wherein the toothed rack (4) is arranged in a housing (11),
**characterised in that**
an adjustable counter bearing (12) is assigned to the stop element (10) in the housing (11).

9. The actuation device according to one of Claims 1 to 8,
**characterised in that**
a functional connection between the toothed rack (4) and the gearwheel element (5) which exists via the intermediate gearwheel element (7) can be decoupled.

10. The actuation device according to Claim 9,
**characterised in that**
an adjustment element (13) is provided at a distance from the rotation axis on the gearwheel element (5) and a guide element (14) which interacts with the adjustment element (13) in the decoupled position is provided on the toothed rack (4).

## Revendications

1. Dispositif d'actionnement comprenant un organe d'entraînement consistant en un cylindre (1) et un piston (2) avec une tige de piston (3), dans lequel il est prévu une crémaillère (4) sur la tige de piston (3), à l'extérieur du cylindre (1), laquelle est conçue de manière à coopérer avec un élément de roue dentée (5), sur lequel est monté un organe d'actionnement (6) pivotant sans possibilité de rotation par rapport à l'organe d'entraînement,
**caractérisé en ce que**
un élément de roue dentée intermédiaire (7), coopérant d'une part avec la crémaillère (4) et d'autre part avec l'élément de roue dentée (5), est agencé entre le cylindre (1) et l'élément de roue dentée (5).

2. Dispositif d'actionnement selon la revendication 1,
**caractérisé en ce que**
aussi bien l'élément de roue dentée (5) que l'élément de roue dentée intermédiaire (7) sont agencés d'un côté de la crémaillère (4).

3. Dispositif d'actionnement selon la revendication 1 ou 2,
**caractérisé en ce que**
à son extrémité libre détournée du piston (2), un élément de délimitation d'angle d'ouverture (8) est attribué à la crémaillère (4).

4. Dispositif d'actionnement selon la revendication 3,
**caractérisé en ce que**
la crémaillère (4) comporte un espace creux (9) pour l'admission de l'élément de délimitation d'angle d'ouverture (8).

5. Dispositif d'actionnement selon l'une des revendications 1 à 4,
**caractérisé en ce que**
l'élément de roue dentée intermédiaire (7) est conçu comme un cylindre de roue dentée agencé d'un côté de la crémaillère (4), et l'élément de roue dentée (5) entoure la crémaillère (4) de l'autre côté de celle-ci.

6. Dispositif d'actionnement selon la revendication 5,
**caractérisé en ce que**
l'élément de roue dentée (5) est conçu comme une double roue dentée entourant la crémaillère (4) des deux côtés.

7. Dispositif d'actionnement selon la revendication 5 ou 6,
**caractérisé en ce que**
un élément de butée (10) est agencé au choix sur la tige de piston (3) ou sur la crémaillère (4).

8. Dispositif d'actionnement selon la revendication 7, dans lequel la crémaillère (4) est agencée dans un boîtier (11),
**caractérisé en ce que**
un contre-appui (12) conçu réglable est attribué à l'élément de butée (10) dans le boîtier (11).

9. Dispositif d'actionnement selon l'une des revendications 1 à 8,
**caractérisé en ce que**
une liaison fonctionnelle produite par l'élément de roue dentée intermédiaire (7) est réalisée entre la crémaillère (4) et l'élément de roue dentée (5), de façon à pouvoir être désaccouplée.

10. Dispositif d'actionnement selon la revendication 9,
**caractérisé en ce que**
il est prévu un élément de réglage (13) sur l'élément de roue dentée (5), à distance de l'axe de rotation, ainsi qu'un élément de guidage (14) coopérant avec l'élément de réglage (13) dans une position désaccouplée.
